Europäisches Patentamt

European Patent Office

Office européen des brevets

(19)

(11) Veröffentlichungsnummer : **0 402 686 B1**

# (12) EUROPÄISCHE PATENTSCHRIFT

(45) Veröffentlichungstag der Patentschrift :
**04.08.93 Patentblatt 93/31**

(51) Int. Cl.$^5$ : **C25B 7/00**, C09K 3/14

(21) Anmeldenummer : **90110024.8**

(22) Anmeldetag : **26.05.90**

(54) **Verfahren zur Herstellung gesinterter mikrokristalliner alpha-Al2O3-Körper sowie deren Verwendung.**

(30) Priorität : **10.06.89 DE 3919044**

(43) Veröffentlichungstag der Anmeldung :
**19.12.90 Patentblatt 90/51**

(45) Bekanntmachung des Hinweises auf die
Patenterteilung :
**04.08.93 Patentblatt 93/31**

(84) Benannte Vertragsstaaten :
**AT BE CH DE DK ES FR GB GR IT LI LU NL SE**

(56) Entgegenhaltungen :
**EP-A- 0 104 903**
**EP-A- 0 325 127**
**FR-A- 2 401 119**

(73) Patentinhaber : **H.C. Starck GmbH & Co. KG**
**Im Schleeke 78-91**
**W-3380 Goslar (DE)**

(72) Erfinder : **Winter, Gerhard, Prof.-Dr.**
**Ostkampstrasse 2**
**W-3387 Vienenburg 2 (DE)**
Erfinder : **Möltgen, Paul, Dr.**
**Steigmattstrasse 2**
**W-7887 Laufenburg (DE)**

(74) Vertreter : **Steiling, Lothar, Dr. et al**
**c/o Bayer AG, Konzernverwaltung RP, Patente**
**Konzern**
**W-5090 Leverkusen 1 Bayerwerk (DE)**

EP 0 402 686 B1

## Beschreibung

Die vorliegende Erfindung betrifft ein Verfahren zur Herstellung gesinterter mikrokristalliner Körper auf Basis von $\alpha$-$Al_2O_3$ sowie deren Verwendung.

Eine bevorzugte Anwendung von $\alpha$-$Al_2O_3$-Sinterkörpern ist deren Einsatz als Schleifmittel.

Neben geschmolzenen Korundschleifmitteln sind solche aus gesintertem Material schon seit ca. 50 Jahren bekannt. In der neueren Zeit wurden gesinterte Schleifmittel auf $\alpha$-$Al_2O_3$-Basis bekannt, deren mikrokristalline Struktur besonders schleiftechnische Vorteile mit sich brachte.

So wird in der US-A-4 314 827 ein mikrokristallines Schleifmaterial beschrieben, das über die Sol-Gel-Technik bei Sintertemperaturen von ca. 1400°C hergestellt wird. Als Sinterhilfe wird eine modifizierte Komponente wie $HfO_2$, $ZrO_2$, $MgO$, $ZnO$, $CoO$, $NiO$ u.a. zugesetzt.

In der EP-A-0 152 768 wird ein Schleifmaterial offenbart, welches ebenfalls durch Sintern eines Aluminiumoxidhydratgels hergestellt wird. Als Keimbildner werden hier zur Herstellung der Umwandlungstemperatur von $\gamma$-$Al_2O_3$ in $\alpha$-$Al_2O_3$ feinste $\alpha$-$Al_2O_3$-Teilchen zugesetzt. Weitere Zusätze von Kristallwachstumshemmern wie $MgO$, $SiO_2$, $Cr_2O_3$, $Fe_2O_3$, $ZrO_2$ können ebenfalls verwendet werden.

Ähnliche Verfahren und Stoffe gehen aus den EP-A-0 024 099, DE-A-3 219 607, US-A-4 518 397, US-A-4 574 003, US-A-4 623 364, EP-A-0 168 606, EP-A-0 200 487, EP-A-0 228 856, EP-A-0 209 084 und EP-A-0 263 810 hervor.

Allen vorgenannten Verfahren ist gemeinsam, daß sie über ein Sol-Gel-Verfahren mit feinstdispersem Aluminiumoxidmonohydrat vom Typ des Böhmits durchgeführt werden. Die verhaltnismäßig teuren Rohstoffe, welche z.B. über die Hydrolyse von Aluminium-organischen Verbindungen gewonnen werden, und die aufwendige Verfahrenstechnik lassen die Kosten des Sol-Gel-Korundes auf ein Vielfaches der herkömmlichen Korunde ansteigen.

In der DE-C-3 604 848 wird ein Verfahren beschrieben, eine Dispersion aus tonerdehaltigen Rohstoffen, kieselsäurehaltigen Verbindungen und weiteren Zusätzen (Verbindungen der Metalle Co, Ni, Cr, Zr, Zn, Si, Ti oder Ni) zu einem sinterfähigen Schlicker zu vermahlen, aus dem durch stufenweises Trocknen und Sintern bei Temperaturen bis 1700°C ein Schleifmittel hergestellt werden kann, dessen Korundkristalle einen Durchmesser von weniger als 5 $\mu$m haben. Es gelingt zwar so, den teuren Rohstoff zu umgehen, allerdings ist man immer noch auf sehr aufwendige Mahlprozesse und hohe Sintertemperaturen angewiesen, um zu dem gewünschten mikrokristallinen Schleifmittel zu gelangen.

Das so erhaltene Produkt enthält außerdem ca 2 % Silikate, die schleifleistungsmäßig keinen Wert besitzen, und hat mit einer Kristallitgröße kleiner 5 $\mu$m immer noch nicht die Feinstruktur eines Stoffes, der über die Sol-Gel-Methode hergestellt wurde (Kristallitgröße kleiner 0,4 $\mu$m).

In der Submicron-Struktur wird aber eine Ursache für die besonderen schleiftechnischen Vorteile dieser neuen Schleifmittel gesehen.

In der EP-A-0 404 721 wird ein Verfahren beschrieben, über eine hydrothermale Behandlung von $Al(OH)_3$-haltigen Rohstoffen zu einer mikrokristallinen Böhmit zu kommen, das für einen Einsatz im Sol-Gel-Prozeß geeignet ist.

Hier ist es zwar gelungen, einen Teil des Ausgangsmaterials durch einen kostengünstigen Rohstoff zu ersetzen, man ist aber immer nach je nach Verwendungszweck des gewünschten Produktes auf feinstdisperses Böhmit als Keimmaterial in Mengen zwischen 7,5 % und 60 %, bezogen auf das Endprodukt $Al_2O_3$, angewiesen. Als feinstdisperses Böhmit wird wieder der über Al-Alkoxide gewonnene, sehr teure Ausgangsstoff verwendet.

Ein weiterer Nachteil der obengenannten Sol-Gel-Verfahren ist, daß mit erheblichen Mengen Salpetersäure gearbeitet wird, die anschließend im Gel gebunden ist und beim Trocknen und Kalzinieren als Stickoxid wieder freigesetzt wird. Dies bringt große Korrosions- und Umweltprobleme mit sich. Um hier Schäden abzuwenden, müssen entsprechende Schutzmaßnahmen ergriffen werden, die die Verfahren zusätzlich verteuern.

In der DE-A 3 334 098 wird ein Verfahren beschrieben, bei dem aus einer wäßrigen Dispersion Aluminiumoxidmonohydrat elektrophoretisch abgeschieden wird.

Das Produkt wird analog den bekannten Sol-Gel-Verfahren getrocknet, kalziniert und gesinert, und kann u.a. als Schleifmittel verwendet werden. Als Vorteil gegenüber den Sol-Gel-Verfahren wird vor allem die Energieersparnis genannt. Ein Nachteil des Verfahrens ist, daß man wieder auf das relativ teure feinstdisperse Aluminiumoxid-monohydrat als Ausgangsstoff zurückgreifen muß. In der beschriebenen Dispersion ist maximal bis zu 40 % Aluminiumoxid-monohydrat enthalten. Dieser geringe Feststoffanteil und die damit verbundenen großen Flüssigkeitsvolumina erfordern eine sehr aufwendige und energieintensive Verfahrenstechnik.

Die Elektrophorese im wäßrigen Medium hat den zusätzlichen Nachteil, daß an den Elektroden häufig eine elektrolytische Zersetzung des Wassers stattfindet. Dies führt zu einer nur schwer kontrollierbaren Porenbildung im abgeschiedenen Feststoff, was wiederum die Härte und die Schleifleistung des daraus gewonnenen Schleifkorns negativ beeinflussen kann.

Aufgabe dieser Erfindung ist es somit, ein Verfahren zur Herstellung eines mikrokristallinen $\alpha$-Al$_2$O$_3$-Sinterkörpers aufzuzeigen, welches die beschriebenen Nachteile des Standes der Technik nicht aufweist.

Es wurde nun gefunden, daß diese Anforderungen erfüllt werden durch ein Verfahren, das auf der elektrophoretischen Abschaltung von $\alpha$-Al$_3$O$_3$ aus einer entsprechenden organischen $\alpha$-Al$_2$O$_3$-Suspension beruht.

Gegenstand der Erfindung ist somit ein Verfahren zur Herstellung gesinterter mikrokristalliner Körper auf Basis von $\alpha$-Al$_2$O$_3$, wobei aus einer organischen $\alpha$-Al$_2$O$_3$ haltigen Suspension Al$_2$O$_3$ auf eine Elektrode abgeschieden, von der Elektrode entfernt, getrocknet, gesintert und zerkleinert wird. Dabei kann man durch gezielte Wahl der Korngröße des Ausgangsstoffes auf einfache Weise die Kristallitgröße des Endproduktes beeinflussen.

Besonders gute Erfolge werden dann erreicht, wenn als Ausgangsmaterial für die $\alpha$-Al$_2$O$_3$-haltige Suspension $\alpha$-Al$_2$O$_3$-Teilchen einer Kristallitgröße von <1 $\mu$m eingesetzt werden.

Aus wirtschaftlichen Überlegungen ist es zweckmäßig, den $\alpha$-Al$_2$O$_3$-Gehalt hochzuhalten. In einer besonders bevorzugten Ausführungsform des erfindungsgemäßen Verfahrens weist die $\alpha$-Al$_2$O$_3$-haltige Suspension einen Al$_2$O$_3$-Anteil von >50 Gew-% auf. Um eine besonders stabile $\alpha$-Al$_2$O$_3$-haltige Suspension zu erhalten ist es notwendig, diese mit geeigneten organischen Suspensionsmitteln zu versetzten.

Bevorzugte organische Suspensionsmittel sind Lösungsmittel wie Methylisobutylketon, Aceton, Ether oder Alkoholen. Besonders bevorzugt sind alkoholische Lösungsmittel.

Als Dispergierhilfen eignen sich besonders Polyelektrolyte wie 3,6,9-Trioxaundecandisäure, Polyglykoldisäure, Polyvinylpyrrolidon, Naphthalinsulfonsäurekondensat, Maleinsäurecopolymere, Polymethacrylsäure, Polyacrylsäure, partiell veresterte Polyacrylsäure, Nitrocellulose, Polyvinylbutyral, aber auch Wachs und Harze oder organische Basen wie Triethylamin, Tetrabutylammoniumhydroxid oder Carbonsäuren wie Essigsäure oder p-Hydroxybenzoesäure.

Besonders gute Erfolge werden dabei durch den Zusatz von Polyacrylsäure erreicht. In einer bevorzugten Ausführungsform des erfindungsgemäßen Verfahrens enthält somit die $\alpha$-Al$_2$O$_3$-haltige Suspension 0,5 bis 3,0 Gew.-% Polyacrylsäure, bezogen auf den Al$_2$O$_3$-Gehalt.

Die bevorzugte Spannung bei dem erfindungsgemäßen elektrophoretischen Verfahren liegt zwischen 10 und 300 Volt. Unter diesen Bedingungen gelingt es, mehrere mm dicke Al$_2$O$_3$-Platten abzuscheiden.

In Fällen, in denen eine vollständige Entfernung nur problematisch zu vollziehen ist, kann dies durch Auflage einer Graphitfolie auf die Elektroden vermieden werden. Graphit als Folienmaterial bringt dabei den Vorteil mit sich, daß es beim Sintervorgang rückstandslos verbrennt. Eine bevorzugte Ausführungsform des erfindungsgemäßen Verfahrens besteht somit darin, daß die Elektroden mit einer Graphitfolie belegt werden. Weiterhin hat die Graphitfolie die Funktion, das Entfernen der Schicht von der Elektrode zu erleichtern.

Diese so erhaltenen Grünkörper werden vorteilhafterweise zunächst getrocknet. Dies geschieht vorzugsweise bei Temperaturen oberhalb 50°C. Es schließt sich dann ein Sintervorgang an, bei Temperaturen zwischen 1300 und 1700°C, bevorzugt bei 1550 bis 1650°C. Dieser Sintervorgang ist im allgemeinen nach 15 Minuten abgeschlossen. Die Sintertemperatur sowie die Pfropfqualität kann durch die Zugabe von Sinterhilfen zu der $\alpha$-Al$_2$O$_3$-haltigen Suspension beeinflußt werden. Bevorzugt werden 0,2 bis 10 Gew.-%, besonders bevorzugt 0,5 bis 2 Gew.-%, zugegeben.

Die Zerkleinerung wird im allgemeinen nach dem Sintern durchgeführt, weil hierbei besonders schneidfähige Kanten entstehen. Ebenso kann aber auch neben Vorteilen der Energieersparnis ein Zerkleinern vor dem Sintern gute Ergebnisse bringen. Die Zerkleinerung erfolgt vorteilhaft in Walzenmühlen.

Eine weitere vorteilhafte Variante des erfindungsgemäßen Verfahrens liegt somit darin, der $\alpha$-Al$_2$O$_3$-haltigen Suspension eine oder mehrere Sinterhilfen zuzusetzen, die dann zusammen mit dem Al$_2$O$_3$ abgeschieden werden. Es gelingt so, insbesondere die Sintertemperatur herabzusetzen. Diese bevorzugte Ausführungsform des erfindungsgemäßen Verfahrens ist dadurch gekennzeichnet, daß der $\alpha$-Al$_2$O$_3$-haltigen Suspension Sinterhilfen aus der Gruppe CoO, NiO, MgO, Mg-Spinell, ZnO, Cr$_2$O$_3$, Fe$_2$O$_3$, SiO$_2$, TiO$_2$, Y$_2$O$_3$, Nb$_2$O$_5$, HfO$_2$ und ZrO$_2$ zugesetzt werden.

Nach dem erfindungsgemäßen Verfahren gelingt die Herstellung von gesinterten mikrokristallinen Körpern mit einer Dichte >98 % der Theorie und einer Härte >20 GPa, deren Kristallitgröße zwischen 0,1 und 1,0 $\mu$m liegt, bevorzugt unterhalb 0,4 $\mu$m.

Aufgrund dieser Eigenschaften eignen sich diese Sinterkörper hervorragend als Schleifmittel.

Gegenstand dieser Erfindung ist somit auch die Verwendung der erfindungsgemäß hergestellten gesinterten mikrokristallinen Körper als Schleifmittel und für die Herstellung von Schleif- und Schneidwerkzeugen.

Da die Schleifeigenschaften wesentlich von der Kristallitstruktur des jeweiligen Schleifkorns abhängen, gelingt es nach dem erfindungsgemäßen Verfahren, für die verschiedensten Anwendungszwecke Schleifkörnungen mit einem für die jeweilige Anwendung optimalen Kristallitgefüge bereitzustellen.

Im folgenden wird die Erfindung beispielhaft erläutert.

EP 0 402 686 B1

Beispiel 1

1,5 % Polyacrylsäure (bezogen auf das eingesetzte $Al_2O_3$) werden in Ethanol unter Rühren gelöst. Zu dieser Lösung werden 60 Gew.-% $Al_2O_3$-Pulver (bezogen auf den Gesamtansatz) mit einer mittleren Korngröße von 0,6 µm zugegeben. Durch Behandlung mit Ultraschall und gleichzeitiges Rühren wird die Suspension homogenisiert.

Die stabile Suspension wird mit 5000 Umdrehungen pro Minute so lange zentrifugiert, bis die mittlere Korngröße der $Al_2O_3$ Teilchen in der Suspension bei 0,2 µm liegt.

Man füllt die Suspension in die Elektrophoresezelle und scheidet bei einer Spannung von 50 Volt über die Dauer von 15 Minuten mit 27 mA einen Grünkörper von ca 3 mm Dicke ab.

Der Grünkörper wird zunächst an der Luft und dann im Trockenschrank bei 50°C getrocknet. Anschließend wird bei 1600°C gesintert.

Man erhält einen dichten $Al_2O_3$-Körper mit einer Kristallitgröße <1 µm.

Die Härte des so erhaltenen Schleifkorns liegt bei 21 GPa (nach Vickers).

### Schleiftest

| Schleifmaterial | Abtragsleistung in % | |
| --- | --- | --- |
| | Fiberscheibe | Schleifband |
| Normalkorund (Elektroschmelz-korund) | 100 | 100 |
| Zirkonkorund EZ 347 ex Norton | 260 | 340 |
| Sol-Gel-Korund | 350 | 440 |
| Beispiel 1 | 290 | 360 |

Beispiel 2

Herstellung der Suspension wie in Beispiel 1.

Vor der Behandlung mit Ultraschall wird die Suspension mit 5 % MgO versetzt und 24 Stunden in einer Kugelmühle behandelt.

Danach erfolgt die Behandlung mit Ultraschall. Die Suspension wird anschließend zentrifugiert, bis die mittlere Teilchengröße bei 0,2 µm liegt.

Die Elektrophorese, das Trocknen und das Sintern wird wie in Beispiel 1 durchgeführt.

Man erhält einen dichten $Al_2O_3$-Körper mit einem Spinellanteil von ca 2 % und einer Kristallitgröße <0,5 µm.

Die Härte des Materials liegt bei 19 GPa.

### Schleiftest

| Schleifmaterial | Abtragsleistung in % | |
| --- | --- | --- |
| | Fiberscheibe | Schleifband |
| Normalkorund | 100 | 100 |
| Beispiel 2 | 330 | 410 |

4

EP 0 402 686 B1

Beispiel 3

Wie in Beispiel 2 verfahren.
Statt MgO wird 3 %. Mg-Spinell zugegeben.
Man erhält ein Schleifkorn auf $Al_2O_3$-Basis mit einer Härte von 20 GPa, einer Dichte von 97 % der Theorie und einer Kristallitgröße von 0,7 μm.

### Schleiftest

| Schleifmaterial | Abtragsleistung in % | |
|---|---|---|
| | Fiberscheibe | Schleifband |
| Normalkorund | 100 | 100 |
| Beispiel 3 | 310 | 350 |

## Patentansprüche

1. Verfahren zur Herstellung gesinterter, mikrokristalliner Körper auf Basis von α-$Al_2O_3$, dadurch gekennzeichnet, daß aus einer organischen α-$Al_2O_3$-haltigen Suspension $Al_2O_3$ elektrophoretisch auf einer Elektrode abgeschieden, von der Elektrode entfernt, getrocknet, gesintert und zerkleinert wird.

2. Verfahren gemäß Anspruch 1, dadurch gekennzeichnet, daß als Ausgangsmaterial für die α-$Al_2O_3$-haltige Suspension α-$Al_2O_3$-Teilchen einer Kristallitgröße von <1 μm eingesetzt werden.

3. Verfahren gemäß einem der Ansprüche 1 oder 2, dadurch gekennzeichnet, daß die α-$Al_2O_3$-haltige Suspension einen $Al_2O_3$-Anteil von >50 Gew.-% aufweist.

4. Verfahren gemäß einem oder mehrerer der Ansprüche 1 bis 3, dadurch gekennzeichnet, daß die α-$Al_2O_3$-haltige Suspension 0,5 bis 3,0 Gew.-% Polyacrylsäure, bezogen auf den $Al_2O_3$-Gehalt, enthält.

5. Verfahren gemäß einem oder mehrerer der Ansprüche 1 bis 4, dadurch gekennzeichnet, daß der α-$Al_2O_3$-haltigen Suspension Sinterhilfen aus der Gruppe CoO, NiO, MgO, Mg-Spinell, ZnO, $Cr_2O_3$, $Fe_2O_3$, $SiO_2$, $TiO_2$, $Y_2O_3$, $Nb_2O_5$, $HfO_2$ und $ZrO_2$ zugesetzt werden.

6. Verwendung der gemäß einem oder mehrerer der Ansprüche 1 bis 5 hergestellten gesinterten mikrokristallinen Körper als Schleifmittel und für die Herstellung von Schleifwerkzeugen.

## Claims

1. A process for the production of sintered microcrystalline compacts based on α-$Al_2O_3$, characterized in that $Al_2O_3$ is electrophoretically deposited on an electrode from an organic α-$Al_2O_3$-containing suspension, removed from the electrode, dried, sintered and size-reduced.

2. A process as claimed in claim 1, characterized in that α-$Al_2O_3$ particles having a crystallite size of <1 μm are used as starting material for the α-$Al_2O_3$-containing suspension.

3. A process as claimed in claim 1 or 2, characterized in that the α-$Al_2O_3$-containing suspension has an $Al_2O_3$ content of >50% by weight.

4. A process as claimed in one or more of claims 1 to 3, characterized in that the α-$Al_2O_3$-containing suspension contains 0.5 to 3.0% by weight polyacrylic acid, based on the $Al_2O_3$ content.

5. A process as claimed in one or more of claims 1 to 4, characterized in that sintering aids from the group consisting of CoO, NiO, MgO, Mg spinel, ZnO, $Cr_2O_3$, $Fe_2O_3$, $SiO_2$, $TiO_2$, $Y_2O_3$, $Nb_2O_5$, $HfO_2$ and $ZrO_2$ are

5

EP 0 402 686 B1

added to the $\alpha$-$Al_2O_3$-containing suspension.

6. The use of the sintered microcrystalline compacts produced by the process claimed in one or more of claims 1 to 5 as abrasives and for the production of grinding tools.

**Revendications**

1. Procédé de fabrication de corps microcristallins frittés à base de $\alpha$-$Al_2O_3$, caractérisé en ce qu'on dépose par électrophorèse sur une électrode du $Al_2O_3$ à partir d'une suspension organique contenant de l'alumine $\alpha$, on détache le dépôt de l'électrode, on le sèche, on le fritte et on le broie.

2. Procédé suivant la revendication 1, caractérisé en ce qu'on utilise comme matière de départ pour la suspension contenant de l'alumine $\alpha$ des particules d'alumine $\alpha$ dont les cristallites ont un diamètre inférieur à 1 $\mu$m.

3. Procédé suivant l'une des revendications 1 et 2, caractérisé en ce que la suspension contenant de l'alumine $\alpha$ présente une proportion de $Al_2O_3$ supérieure à 50 % en poids.

4. Procédé suivant une ou plusieurs des revendications 1 à 3, caractérisé en ce que la suspension contenant de l'alumine $\alpha$ renferme 0,5 à 3,0 % en poids d'acide polyacrylique, par rapport à la teneur en $Al_2O_3$.

5. Procédé suivant une ou plusieurs des revendications 1 à 4, caractérisé en ce que la suspension contenant de l'alumine $\alpha$ est additionnée de substances auxiliaires de frittage du groupe des composés $CoO$, $NiO$, $MgO$, spinelle de Mg, $ZnO$, $Cr_2O_3$, $Fe_2O_3$, $SiO_2$, $TiO_2$, $Y_2O_3$, $Nb_2O_5$, $HfO_2$ et $ZrO_2$.

6. Utilisation de corps microcristallins frittés fabriqués conformément à une ou plusieurs des revendications 1 à 5 comme abrasifs et pour la réalisation d'outils abrasifs.

6